# EUROPÄISCHE PATENTSCHRIFT

(11) **EP 1 716 645 B1**
(45) Veröffentlichungstag und Bekanntmachung des Hinweises auf die Patenterteilung: **11.07.2007**
(21) Anmeldenummer: 04805016.5
(22) Anmeldetag: 23.12.2004
(51) Int. Cl.: H04B 7/06

(54) **VERFAHREN ZUR KOMMUNIKATION BER EINE MEHRZAHL VON NETZSEITI GEN SENDEANTENNEN**
METHOD FOR COMMUNICATING BY MEANS OF A PLURALITY OF NETWORK-SIDE TRANSMISSION ANTENNAS
PROCEDE POUR COMMUNIQUER PAR L'INTERMEDIAIRE D'UNE PLURALITE D'ANTENNES EMETTRICES COTE RESEAU

(30) Priorität: 18.02.2004 EP 04003631
(43) Veröffentlichungstag der Anmeldung: 02.11.2006
(73) Patentinhaber: SIEMENS AKTIENGESELLSCHAFT, 80333 München (DE)
(72) Erfinder: LI, Hui Chateau Regency E802,, Beijing 100102 (CN)
(86) Internationale Anmeldenummer: PCT/EP2004/053686
(87) Internationale Veröffentlichungsnummer: WO 2005/091524

(56) Entgegenhaltungen:
- WO-A-01/18991
- WO-A-02/27972
- GB-A- 2 332 122
- US-B1- 6 320 898

## Beschreibung

Die Erfindung betrifft ein Verfahren zur Kommunikation in einem Funkkommunikationssystem nach dem Oberbegriff des Anspruchs 1. Weiterhin betrifft die Erfindung eine netzseitige Einrichtung und ein Computerprogrammprodukt zur Durchführung des Verfahrens.

In Funkkommunikationssystemen werden Nachrichten, wie beispielsweise Signalisierungsnachrichten oder Nutzdatennachrichten mit Sprachinformationen, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige teilnehmerseitige Funkstationen und netzseitige Funkeinrichtungen handeln. In einem Mobilfunkkommunikationssystem handelt es sich bei zumindest einem Teil der teilnehmerseitigen Funkstationen um mobile Funkstationen. Das Abstrahlen der elektromagnetischen Wellen erfolgt mit Trägerfrequenzen, die in dem für das jeweilige System vorgesehenen Frequenzband liegen.

Mobilfunkkommunikationssysteme sind oftmals als zellulare Systeme z.B. nach dem Standard GSM (Global System for Mobile Communication) oder UMTS (Universal Mobile Telecommunications System) mit netzseitigen Einrichtungen wie z.B. Basisstationen und Einrichtungen zur Kontrolle und Steuerung der Basisstationen ausgebildet.

Außer diesen weiträumig organisierten (supralokalen) zellularen, hierarchischen Funknetzen gibt es auch drahtlose lokale Netze (WLANs, Wireless Local Area Networks) mit einem in der Regel räumlich deutlich stärker begrenzten Funkabdeckungsbereich. Die von den Funkzugangspunkten (AP: Access Point) der WLANs abgedeckten Zellen sind mit einem Durchmesser von bis zu einigen hundert Metern im Vergleich zu üblichen Mobilfunkzellen klein. Beispiele verschiedener Standards für WLANs sind HiperLAN, DECT, IEEE 802.11, Bluetooth und WATM.

Das Dokument WO 01/18991 A1 beschreibt ein zellulares CDMA-Funkkommunikationssystem. Die Basisstationen messen das Signal-zu-Rausch-Verhältnis von Signalen, welche von Mobilstationen in Aufwärtsrichtung gesendet werden. Abhängig von diesen Messergebnissen wird einer oder mehrere Abwärts-Funkkanäle für die Kommunikation der jeweiligen Mobilstation bestimmt.

Das Dokument WO 02/27972 A2 beschreibt ein Funkkommunikationssystem, bei welchem die Basisstationen mehrere Antennenelemente aufweisen. Wenn eine Basisstation die Kommunikation mit einer Teilnehmerstation initiiert, sendet sie eine Paging-Nachricht. Die Paging-Nachricht kann auf einem Kanal gesendet werden, welcher auch Datenübertragungen zu anderen Teilnehmerstationen enthält. Hierzu werden Signale, welche die Basisstation von den anderen Teilnehmerstationen empfängt, verwendet, um die Smart-Antenna-Ansteuerung für das Paging-Signal zu bestimmen.

Während in vielen Funkkommunikationssystemen pro Zelle eine in der Regel zentral angeordnete netzseitige Antenne zur Versendung von Nachrichten an Funkstationen eingesetzt wird, ist es auch möglich, pro Funkzelle eine Mehrzahl von netzseitigen Antennen zu verwenden. Nachrichten für Funkstationen können dann gleichzeitig über mehrere netzseitige Antennen abgestrahlt werden. Wird eine Nachricht an eine Funkstation über eine Mehrzahl von netzseitigen Antennen ausgestrahlt, so entsteht hierdurch u.U. störende Interferenz für die Nachrichtenübertragung an andere sich in der Nähe befindende Funkstationen. Daher ist es vorteilhaft, Nachrichten für eine Funkstation nur über eine begrenzte Anzahl von netzseitigen Antennen auszustrahlen.

Der Erfindung liegt die Aufgabe zugrunde, ein effizientes Verfahren zur Kommunikation vorzustellen, bei dem eine Nachricht über eine Mehrzahl von netzseitigen Antennen an eine Funkstation gesendet wird. Weiterhin sollen eine netzseitige Einrichtung und ein Computerprogrammprodukt für eine netzseitige Einrichtung zur Durchführung des Verfahrens vorgeschlagen werden.

Diese Aufgabe wird hinsichtlich des Verfahrens durch ein Verfahren mit den Merkmalen des Anspruchs 1 gelöst. Die Aufgabe hinsichtlich der netzseitigen Einrichtung und des Computerprogrammproduktes wird durch eine netzseitige Einrichtung und ein Computerprogrammprodukt mit den Merkmalen von nebengeordneten Ansprüchen gelöst.

Vorteilhafte Ausgestaltungen und Weiterbildungen sind Gegenstand von Unteransprüchen.

Das Verfahren wird in einem Funkkommunikationssystem, welches netzseitige Einrichtungen und Funkstationen umfasst, angewandt. Eine Nachricht einer Funkstation wird von netzseitigen Antennen empfangen. Im Anschluss daran wird eine Nutzdatennachricht über eine Mehrzahl von netzseitigen Antennen zu der Funkstation übertragen. Erfindungsgemäß hängt die Zugehörigkeit von netzseitigen Antennen zu der Mehrzahl von netzseitigen Antennen davon ab, welche netzseitigen Antennen die Nachricht der Funkstation empfangen haben. Bei der netzseitig empfangenen Nachricht handelt es sich um eine auf den Empfang einer Signalisierungsnachricht hin gesendete Antwortnachricht. Die Signalisierungsnachricht fordert die Funkstation auf, eine Antwortnachricht zu senden, und wird über mindestens eine netzseitige Antenne zu der Funkstation übertragen.

Bei den netzseitigen Einrichtungen des Funkkommunikationssystems kann es sich z.B. um netzseitige Antennen, Einrichtungen zur Steuerung der Antennen und Einrichtungen zur Erstellung von zu sendenden und Verarbeitung von empfangenen Nachrichten handeln. Die Funkstationen können z.B. verschiedenartige, insbesondere mobile, Teilnehmerstationen umfassen. Mit Vorzug kann es sich bei dem Funkkommunikationssystem um ein zellulares System handeln, wobei jede Funkzelle eine oder mehrere netzseitige Antennen aufweist. Bei mehreren netzseitigen Antennen pro Funkzelle sind alle netzseitigen Antennen der jeweiligen Funkzelle mit einer netzseitigen Einrichtung verbunden, welche auszustrahlende Nachrichten an die netzseitigen Antennen übermittelt. Netzseitige Antennen verschiedener Funkzellen erhaltene die von ihnen auszustrahlenden Nachrichten von verschiedenen netzseitigen Einrichtungen.

Die Nachricht der Funkstation, aufgrund deren Empfang hin netzseitig entschieden werden kann, über welche netzseitigen Antennen eine zukünftig zu versendende Nutzdatennachricht an die Funkstation zu senden ist, kann insbesondere eine Identifikationsinformation der Funkstation umfassen. Nach der Auswertung, über welche netzseitigen Antennen die Nachricht der Funkstation empfangen wurde, wird eine Nutzdatennachricht an die Funkstation über eine Mehrzahl von Antennen gesendet. Die Zusammensetzung der Mehrzahl an netzseitigen Antennen, d.h. die Frage, aus welchen netzseitigen Antennen die Mehrzahl der netzseitigen Antennen besteht, kann so festgelegt werden, dass alle diejenigen netzseitigen Antennen, welche die Nachricht der Funkstation empfangen haben bzw. mit einem Mindestempfangspegel empfangen haben, die Nutzdatennachricht an die Funkstation versenden. Es können aber neben dem Kriterium, welche netzseitigen Antennen die Nachricht der Funkstation empfangen haben, auch weitere Kriterien zur Festlegung der Mehrzahl der netzseitigen Antennen verwendet werden, wie z.B. eine Mindest- oder Höchstanzahl an zu verwendenden netzseitigen Antennen, eine Auslastung von netzseitigen Antennen und/oder eine geographische oder zellmäßige Verteilung bzw. Anordnung der netzseitigen Antennen.

Es ist vorteilhaft, wenn sich die netzseitigen Antennen der Mehrzahl an netzseitigen Antennen an unterschiedlichen Positionen innerhalb des Funkkommunikationssystems befinden, d.h. getrennt sind durch Distanzen, welche groß gegenüber der zur Funkübertragung verwendeten Wellenlänge sind. In einem zellularen System z.B. können die netzseitigen Antennen einer Zelle in etwa regelmäßig über die Zelle verteilt sind. Mit Vorzug erfolgt die Versendung der Nutzdatennachricht an die Funkstation über die Mehrzahl von netzseitigen Antennen zeitlich synchron oder zumindest annähernd synchron oder mit netzseitig festgelegten Zeitdifferenzen zwischen der Versendung der Nutzdatennachricht über die einzelnen netzseitigen Antennen.

Vorteilhaft ist es, wenn die Signalisierungsnachricht über eine Gruppe von netzseitigen Antennen gesendet wird, wobei diese Gruppe die Mehrzahl der netzseitigen Antennen, über welche später die Nutzdatennachricht an die Funkstation gesendet wird, umfasst. Die Signalisierungsnachricht kann insbesondere eine Identifikationsinformation der Funkstation umfassen.

Die Funkstation wird explizit aufgefordert, die Nachricht zu senden, welche dann netzseitig zur Auswahl von geeigneten netzseitigen Antennen zum Versenden von Nachrichten an die Funkstation verwendet werden kann. Insbesondere ist es möglich, dass die Signalisierungsnachricht ausschließlich zu dem Zweck der Anforderung der Antwortnachricht versendet wird.

Mit Vorzug wird die Signalisierungsnachricht in regelmäßigen ersten Zeitabständen gesendet. Es ist auch möglich, dass die Signalisierungsnachricht vor der Versendung der Nutzdatennachricht an die Funkstation gesendet wird, unter der Bedingung, dass seit der letzten Versendung einer Nachricht des Typs der Signalisierungsnachricht ein bestimmter zweiter Zeitabstand verstrichen ist. Letztgenannte Ausgestaltung ermöglicht es, dann, wenn netzseitig eine Nutzdatennachricht für die Funkstation vorliegt, zu prüfen, wann das letzte Mal bestimmt wurde, welche netzseitigen Antennen zur Versendung zu verwenden sind. Ist diese letzte Bestimmung länger als der zweite Zeitabstand her, so kann eine Signalisierungsnachricht versendet werden, um vor der Versendung der Nutzdatennachricht die geeigneten netzseitigen Antennen festzulegen. Auch die Kombination der regelmäßigen Versendung der Signalisierungsnachricht mit einer Versendung der Signalisierungsnachricht aus konkretem Anlass, d.h. mit der Überprüfung, ob die Signalisierungsnachricht vor einer Nutzdatennachrichtversendung gesendet werden soll, ist möglich.

Es ist möglich, dass die Signalisierungsnachricht über alle netzseitigen Antennen einer oder mehrerer Funkzellen des Funkkommunikationssystems oder über alle netzseitigen Antennen des Funkkommunikationssystems gesendet wird. Die Entscheidung darüber, über welche netzseitigen Antennen die Signalisierungsnachricht an die Funkstation gesendet wird, kann davon abhängig gemacht werden, wie genau die aktuelle Position der Funkstation im Funkkommunikationssystem bekannt ist.

Weiterhin ist es möglich, dass die Mehrzahl von netzseitigen Antennen derselben Funkzelle des Funkkommunikationssystems angehören, oder dass zumindest manche der netzseitigen Antennen der Mehrzahl von netzseitigen Antennen verschiedenen Funkzellen des Funkkommunikationssystems angehören. Hierdurch können Handover-Vorgänge zwischen verschiedenen Funkzellen vereinfacht werden.

In einer bevorzugten Ausführungsform der Erfindung umfasst die Signalisierungsnachricht Identifikationsinformationen der jeweiligen Funkzelle, über deren netzseitige Antenne oder Antennen sie gesendet wird, und die Antwortnachricht umfasst Identifikationsinformationen derjenigen Funkzelle oder Funkzellen, von deren netzseitigen Antenne oder Antennen die Funkstation die Signalisierungsnachricht empfangen hat. Wird die Signalisierungsnachricht über netzseitige Antennen mehrerer Funkzellen ausgestrahlt, so trägt die Signalisierungsnachricht in diesen Funkzellen jeweils eine unterschiedliche zellspezifische Identifikationsinformation. Empfängt die Funkstation die Signalisierungsnachricht lediglich über netzseitige Antennen einer einzigen Funkzelle, so beinhaltet die Antwortnachricht Identifikationsinformation nur von dieser Funkzelle. Empfängt die Funkstation die Signalisierungsnachricht hingegen über netzseitige Antennen einer ersten und einer zweiten Funkzelle, so beinhaltet die Antwortnachricht Identifikationsinformation von beiden Funkzellen.

Die erfindungsgemäße netzseitige Einrichtung weist auf: Mittel zum Empfangen über netzseitige Antennen einer Nachricht einer Funkstation oder zum Empfangen von Informationen über den Empfang über netzseitige Antennen einer Nachricht einer Funkstation, wobei es sich bei der netzseitig empfangenen Nachricht um eine auf den Empfang einer über mindestens eine netzseitige Antenne zu der Funkstation (MS) übertragene Signalisierungsnachricht, welche die Funkstation auffordert, eine Antwortnachricht zu senden, gesendete Antwortnachricht handelt,
Mittel zum Anordnen, dass eine Nutzdatennachricht über eine Mehrzahl von netzseitigen Antennen an die Funkstation gesendet wird, und
Mittel zum Bestimmen der Zugehörigkeit von netzseitigen Antennen zu der Mehrzahl von netzseitigen Antennen in Abhängigkeit davon, welche netzseitigen Antennen die Nachricht der Funkstation empfangen haben.

Die in der erfindungsgemäßen netzseitigen Einrichtung vorhandenen Mittel können insbesondere durch ein Computerprogrammprodukt realisiert werden. Unter einem Computerprogrammprodukt wird im Zusammenhang mit der vorliegenden Erfindung neben dem eigentlichen Computerprogramm (mit seinem über das normale physikalische Zusammenspiel zwischen Programm und Recheneinheit hinausgehenden technischen Effekt) insbesondere ein Aufzeichnungsträger für das Computerprogramm, eine Dateisammlung, eine konfigurierte Recheneinheit, aber auch beispielsweise eine Speichervorrichtung oder ein Server, auf der bzw. dem zum Computerprogramm gehörende Dateien gespeichert sind, verstanden.

Die erfindungsgemäße netzseitige Einrichtung und auch das erfindungsgemäße Computerprogrammprodukt eignen sich insbesondere zur Durchführung des erfindungsgemäßen Verfahrens, wobei dies auch auf die Ausgestaltungen und Weiterbildungen zutrifft. Hierzu können sie weitere geeignete Mittel aufweisen. Die erfindungsgemäße netzseitige Einrichtung kann auch durch eine Mehrzahl an miteinander verbundenen netzseitigen Einrichtungen realisiert werden, welche die jeweiligen Mittel aufweisen.

Im Folgenden wird die Erfindung anhand eines Ausführungsbeispiels näher erläutert. Dabei zeigen:
- Figur 1:: einen Ausschnitt aus einem Funkkommunikationssystem,
- Figur 2:: ein erstes Ablaufdiagramm eines erfindungsgemäßen Verfahrens,
- Figur 3:: ein zweites Ablaufdiagramm eines erfindungsgemäßen Verfahrens,
- Figur 4:: schematisch den Aufbau einer erfindungsgemäßen netzseitigen Steuereinrichtung.

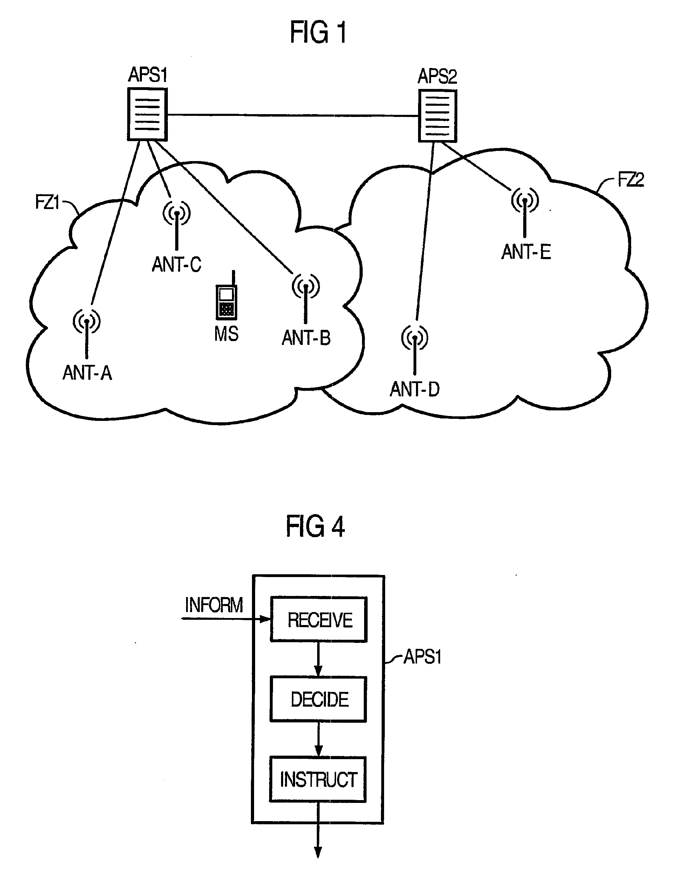

In Figur 1 sind zwei durch Wolken veranschaulichte Funkzellen FZ1 und FZ2 eines Funkkommunikationssystems dargestellt. In der ersten Funkzelle FZ1 befinden sich verteilt die drei netzseitigen Antennen ANT-A, ANT-B und ANT-C, welche mit der ersten Steuereinrichtung APS1 (APS: Antenna Processing Station) verbunden sind. Während die Antennen ANT-A, ANT-B und ANT-C für den Empfang und die Versendung von Nachrichten von bzw. zu Funkstationen, wie z.B. der Mobilstation MS, zuständig sind, findet jegliche Verarbeitung von Funksignalen in der Steuereinrichtung APS1 statt. Entsprechendes gilt für die zweite Funkzelle FZ2, in welcher die beiden netzseitigen Antennen ANT-D und ANT-E mit der zweiten Steuereinrichtung APS2 verbunden sind. Die beiden Steuereinrichtungen APS1 und APS2 sind, gegebenenfalls über weitere Einrichtungen, miteinander verbunden. Weitere Funkzellen, Infrastruktureinrichtungen und teilnehmerseitige Funkstationen sind der Übersichtlichkeit halber nicht in Figur 1 dargestellt.

Unter einer Funkzelle wird hier der geographische Bereich verstanden, der von denjenigen netzseitigen Antennen versorgt wird, welche mit einer gemeinsamen Steuereinrichtung verbunden sind. Antennen verschiedener Funkzellen sind somit nicht direkt mit der gleichen Steuereinrichtung verbunden. Verschiedene Funkzellen können sich überlappen.

Wird eine Nachricht in Abwärtsrichtung an die Mobilstation MS gesendet, so erfolgt die Versendung gleichzeitig über eine Mehrzahl von netzseitigen Antennen. Die Mobilstation MS kann die Signale der verschiedenen netzseitigen Antennen kombinieren und somit eine Nachricht zuverlässiger dekodieren als bei der Versendung durch eine einzige netzseitige Antenne. Hierbei ist es vorteilhaft, eine Nachricht nur über diejenigen Antennen zu versenden, deren Signale die Mobilstation MS aufgrund ihres aktuellen Aufenthaltsortes empfangen kann. Werden Antennen über dies hinaus eingesetzt, so wird unnötige Interferenz für Nachrichten anderer Teilnehmerstationen erzeugt.

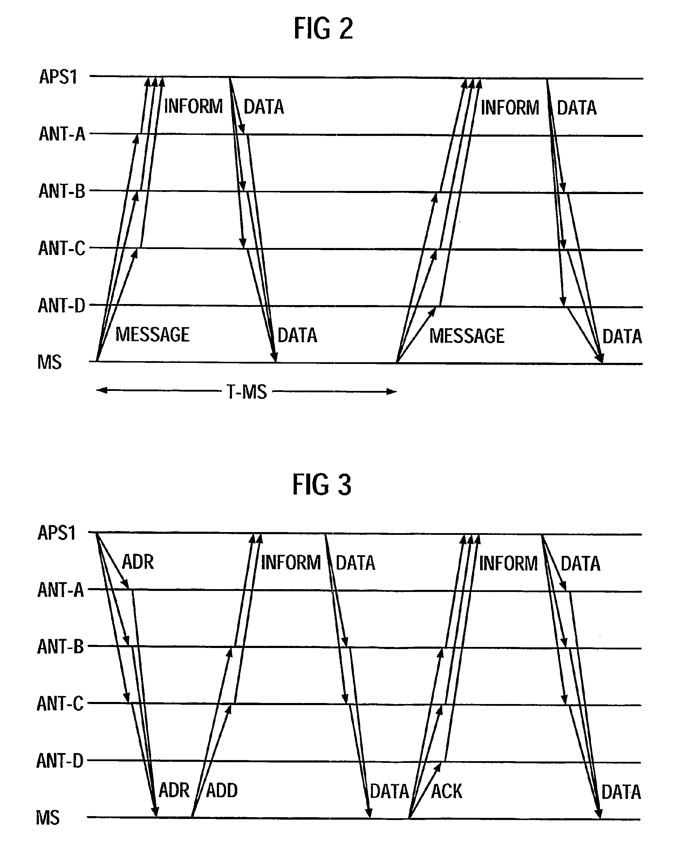

Um zu ermitteln, über welche Antennen eine Nachricht an die Mobilstation MS gesendet werden soll, werden verschiedene Vorgehensweisen vorgeschlagen. Ein Ablaufdiagramm einer ersten Vorgehensweise ist in Figur 2 dargestellt. Zu Beginn sendet die Mobilstation MS per Rundsenderuf eine Nachricht MESSAGE aus, welche ihre Identifikationsinformation enthält. Die Nachricht MESSAGE wird von denjenigen Antennen empfangen, welche sich innerhalb der Funkreichweite der Mobilstation MS befinden. Es wird davon ausgegangen, dass die Funkreichweite der Mobilstation MS und diejenige der netzseitigen Antennen ANT-A, ANT-B, ANT-C, ANT-D und ANT-E in etwa gleich groß ist. In Figur 2 ist der Fall dargestellt, dass die Nachricht MESSAGE von den Antennen ANT-A, ANT-B und ANT-C empfangen wird. Diese Konstellation kann z.B. in etwa der in Figur 1 dargestellten Position der Mobilstation MS entsprechen. Mit den Nachrichten INFORM teilen die drei Antennen ANT-A, ANT-B und ANT-C der Steuereinrichtung APS1 mit, dass sie die Nachricht MESSAGE von der Mobilstation MS empfangen haben, bzw. leiten die drei Antennen ANT-A, ANT-B und ANT-C die Nachricht MESSAGE der Mobilstation MS an die Steuereinrichtung APS1 weiter. Liegt netzseitig eine Nachricht DATA für die Mobilstation MS vor, wird diese von der Steuereinrichtung APS1 an die drei Antennen ANT-A, ANT-B und ANT-C gesendet, welche diese an die Mobilstation MS weiterleiten.

Die Mobilstation MS sendet die Nachricht MESSAGE unaufgefordert in regelmäßigen Zeitabständen T-MS aus. Bis zur nächsten Versendung der Nachricht MESSAGE werden die aufgrund des Empfangs der vorherigen Nachricht MESSAGE ermittelten Antennen ANT-A, ANT-B und ANT-C zur Versendung von Nachrichten an die Mobilstation MS genutzt. Die Länge des Zeitabstandes zwischen den einzelnen Versendungen der Nachrichten MESSAGE wird der Mobilstation MS vom Netz mitgeteilt. Hierbei kann berücksichtigt werden, dass es dann, wenn die Mobilstation MS häufig Nachrichten empfängt, vorteilhaft ist, die Nachricht MESSAGE in kurzen Zeitabständen auszustrahlen. Hierdurch kann vermieden werden, dass allzu oft Nachrichten über Antennen ausgestrahlt werden, welche die Mobilstation MS nicht empfangen kann. Andererseits ist es für den Fall, dass nur selten Nachrichten für die Mobilstation MS vorliegen, günstiger, die Nachricht MESSAGE mit größeren Zeitabständen T-MS auszustrahlen. Hierdurch kann der Signalisierungsoverhead, welcher durch die Versendung der Nachricht MESSAGE erzeugt wird, vermindert werden.

In Figur 2 ist der Fall dargestellt, dass die nächste von der Mobilstation MS gesendete Nachricht MESSAGE von den Antennen ANT-B, ANT-C und ANT-D empfangen wird. Dies würde in Bezug auf die Figur 1 z.B. der Konstellation entsprechen, dass sich die Mobilstation MS nach oben und/oder nach rechts bewegt hat. Die Antennen ANT-B, ANT-C und ANT-D teilen der Steuereinrichtung mit den Nachrichten INFORM mit, dass sie die Nachricht MESSAGE der Mobilstation MS empfangen haben, bzw. leiten die drei Antennen ANT-B, ANT-C und ANT-D die Nachricht MESSAGE der Mobilstation MS an die Steuereinrichtung APS1 weiter. Die Benachrichtigung der Steuereinrichtung APS1 durch die Antenne ANT-D kann über die mit der Antenne ANT-D verbundene Steuereinrichtung APS2 erfolgen. Alternativ ist es auch möglich, dass die beiden Antennen ANT-B und ANT-C die ihnen zugewiesene Steuereinrichtung APS1, und die Antenne ANT-D die ihr zugewiesene Steuereinrichtung APS2 informiert, wonach die beiden Steuereinrichtungen APS1 und APS2 Informationen über den Empfang der Nachricht MESSAGE in ihren Funkzellen bzw. die Nachricht MESSAGE an eine gemeinsame netzseitige Einrichtung weiterleiten, welche ihnen dann die an die Mobilstation MS zu versendende Nachricht DATA übermittelt. Die Versendung der Nachricht DATA an die Mobilstation MS erfolgt im Anschluss über die drei Antennen ANT-B, ANT-C und ANT-D.

Eine weitere Vorgehensweise ist in Figur 3 dargestellt. Während in Figur 2 die Mobilstation MS die Nachricht MESSAGE, aus deren Empfang hergeleitet wird, über welche Antennen im folgenden Nachrichten an die Mobilstation MS zu versenden sind, unaufgefordert versendet, erfolgt zu Beginn des in Figur 3 dargestellten Verfahrensablaufs die Versendung einer Nachricht ADR (ADR: Antenna Detection Request) an die Mobilstation MS, mittels welcher die Mobilstation MS unter Nennung ihrer Identifikationsinformationen aufgefordert wird, eine Signalisierungsnachricht mit ihren Identifikationsinformationen zu versenden. Die Nachricht ADR wird über die drei Antennen ANT-A, ANT-B und ANT-C an die Mobilstation MS gesendet. Hierbei wird davon ausgegangen, dass netzseitig bekannt ist, dass sich die Mobilstation MS in der Funkzelle FZ1 oder zumindest in der näheren Umgebung der Funkzelle FZ1 aufhält. Es ist jedoch auch möglich, die Nachricht ADR über die Antennen einer Mehrzahl von Funkzellen oder über alle Antennen des Funkkommunikationssystems auszustrahlen.

In Reaktion auf den Empfang der Nachricht ADR sendet die Mobilstation MS die ihre Identifikationsinformationen umfassende Nachricht ADD (ADD: Antenna Detection Done), welche von den Antennen ANT-B und ANT-C empfangen wird. Die Antennen ANT-B und ANT-C informieren die Steuereinrichtung APS1 mit der Nachricht INFORM darüber, dass sie eine Nachricht ADR von der Mobilstation MS empfangen haben, bzw. leiten die Nachricht ADR von der Mobilstation MS an die Steuereinrichtung APS1 weiter. Im Anschluss wird die Nachricht DATA über die Antennen ANT-B und ANT-C, welche die Nachricht ADR von der Mobilstation MS empfangen haben, an die Mobilstation MS gesendet.

Die Versendung der Nachricht ADR kann in regelmäßigen Zeitabständen erfolgen. Vorteilhafter ist es jedoch, dass eine Nachrichte ADR immer dann ausgestrahlt wird, wenn netzseitig eine Nachricht an die Mobilstation MS vorliegt. Es ist auch möglich, bei Vorliegen einer Nachricht an die Mobilstation MS zu überprüfen, wann die letzte Nachricht ADR gesendet wurde, und eine neue Nachricht ADR nur dann zu senden, wenn seit der letzten Versendung eine bestimmte Zeitspanne vergangen ist.

Die Nachrichten ADR können mit einer Identifikationsinformation derjenigen Funkzelle ausgestattet sein, in welcher sie versendet werden. Wird eine Nachricht ADR in mehreren Funkzellen ausgestrahlt, so wird in jeder Funkzelle die der jeweiligen Funkzelle entsprechende Identifikationsinformation in die Nachricht ADR eingefügt. Versendet die Mobilstation MS dann eine Antwort ADD auf die Nachricht ADR hin, fügt sie der Antwort ADD die Identifikationsinformationen derjenigen Funkzellen bei, über deren Antennen sie die Nachricht ADR empfangen hat. Dies ist insbesondere dann vorteilhaft, wenn die Mobilstation MS die Nachricht ADR von Antennen verschiedener Funkzellen empfängt. In diesem Fall ist der Steuereinrichtung einer Funkzelle durch die Auswertung der Nachricht ADD bekannt, dass eine Mobilstation auch Antennen anderer Funkzellen empfangen kann, ohne dass diese Tatsache der jeweiligen Steuereinrichtung von einer anderen Steuereinrichtung oder einer anderen netzseitigen Einrichtung mitgeteilt werden muss.

Alternativ oder ergänzend zur Versendung der Nachrichten ADR mit dem Ziel, die für eine Nachrichtenversendung an die Mobilstation MS zu verwendenden Antennen zu bestimmen, kann auch das im folgenden beschriebene, im rechten Teil der Figur 3 dargestellte Verfahren angewandt werden. Nach dem Empfang einer Nachricht DATA bestätigt die Mobilstation MS den Empfang der Nachricht DATA durch die Versendung einer Nachricht ACK, welche Identifikationsinformation der Mobilstation MS umfasst. Diejenigen netzseitigen Antennen, welche die Nachricht ACK empfangen haben, in Figur 3 die Antennen ANT-B, ANT-C und ANT-D, informieren wie oben beschrieben mit der Nachricht INFORM die Steuereinrichtung APS1 bzw. die Steuereinrichtungen APS1 und APS2 über den Empfang der Nachricht ACK von der Mobilstation MS, bzw. leiten die Nachricht ACK von der Mobilstation MS an die jeweilige Steuereinrichtung APS1 bzw. APS2 weiter. Daraufhin werden für die nächste Nachrichtenversendung an die Mobilstation MS die drei Antennen ANT-B, ANT-C und ANT-D verwendet. Dadurch, dass Bestätigungsnachrichten ACK der Mobilstation MS zur Bestimmung der zukünftigen netzseitigen Sendeantennen eingesetzt werden, entsteht kein zusätzlicher Signalisierungsoverhead, da die Bestätigungsnachrichten ACK unabhängig von dem erfindungsgemäßen Verfahren in der Regel ohnehin versendet werden. Weiterhin ermöglicht es die beschriebene Verwendung der Bestätigungsnachrichten ACK, die optimalen Antennen nach jeder Versendung einer von der Mobilstation MS bestätigten Nachricht zu bestimmen. Dies resultiert bei einer häufigen Versendung von Nachrichten an die Mobilstation MS zu einer kontinuierlichen Anwendung des Verfahrens.

Figur 4 zeigt schematisch den Aufbau der Steuereinrichtung APS1. Über die Mittel RECEIVE empfängt die Steuereinrichtung APS1 die Nachrichten INFORM bzw. die von netzseitigen Antennen empfangenen Nachrichten von netzseitigen Antennen. Nach der Auswertung der Nachrichten INFORM in den Mitteln DECIDE bestimmt die Steuereinrichtung APS1, über welche Antennen im folgenden eine Nachrichtenversendung an eine Mobilstation erfolgen soll. Über die Mittel INSTRUCT wird den entsprechenden, mit den Mitteln DECIDE bestimmten Antennen mitgeteilt, dass sie eine Nachricht an die jeweilige Mobilstation versenden sollen. Entsprechend ist auch eine netzseitige Einrichtung für den Fall aufgebaut, dass an eine Mobilstation eine Nachricht über Antennen von verschiedenen Funkzellen versendet werden soll. Die Mittel RECEIVE empfangen die Nachrichten INFORM bzw. die in den verschiedenen Funkzellen empfangenen Nachrichten dann nicht direkt von den netzseitigen Antennen, sondern über die den jeweiligen Antennen zugewiesenen Steuereinrichtungen. Auf analoge Weise kommunizieren die Mittel INSTRUCT nicht direkt mit den netzseitigen Antennen, sondern mit den den jeweiligen Antennen zugewiesenen Steuereinrichtungen.

## Patentansprüche

1. Verfahren zur Kommunikation in einem Funkkommunikationssystem, umfassend netzseitige Einrichtungen (APS1, APS2, ANT-A, ANT-B, ANT-C, ANT-D, ANT-E), Funkstationen (MS), und an einer Mehrzahl von Positionen in etwa regelmäßig über eine Funkzelle verteilte netzseitige Antennen (ANT-A, ANT-B, ANT-C, ANT-D, ANT-E),
bei dem
von zumindest manchen der netzseitigen Antennen (ANT-A, ANT-B, ANT-C, ANT-D, ANT-E) eine Nachricht (ADD) einer Funkstation (MS) empfangen wird,
im Anschluss eine Nutzdatennachricht (DATA) über eine Mehrzahl der netzseitigen Antennen (ANT-A, ANT-B, ANT-C, ANT-D, ANT-E) zu der Funkstation (MS) übertragen wird, die Zugehörigkeit von netzseitigen Antennen (ANT-A, ANT-B, ANT-C, ANT-D, ANT-E) zu der Mehrzahl von netzseitigen Antennen (ANT-A, ANT-B, ANT-C, ANT-D, ANT-E) davon abhängt, welche netzseitigen Antennen (ANT-A, ANT-B, ANT-C, ANT-D, ANT-E) die Nachricht (ADD) der Funkstation (MS) empfangen haben,
**dadurch gekennzeichnet,**
**dass** eine Signalisierungsnachricht (ADR), welche die Funkstation (MS) auffordert, eine Antwortnachricht (ADD) zu senden, über mindestens eine netzseitige Antenne (ANT-A, ANT-B, ANT-C, ANT-D, ANT-E) zu der Funkstation (MS) übertragen wird, wobei die Signalisierungsnachricht (ADR) ausschließlich zu dem Zweck der Anforderung der Antwortnachricht (ADD) versendet wird,
und
**dass** es sich bei der netzseitig empfangenen Nachricht (ADD) um eine auf den Empfang der Signalisierungsnachricht (ADR) hin gesendete Antwortnachricht (ADD) handelt.

2. Verfahren nach Anspruch 1, **dadurch gekennzeichnet,**
**dass** die Signalisierungsnachricht (ADR) in regelmäßigen ersten Zeitabständen gesendet wird.

3. Verfahren nach einem der Ansprüche 1 bis 2, **dadurch gekennzeichnet,**
**dass** die Signalisierungsnachricht (ADR) vor der Versendung der Nutzdatennachricht (DATA) an die Funkstation (MS) gesendet wird, unter der Bedingung, dass seit der letzten Versendung einer Nachricht des gleichen Typs wie die Signalisierungsnachricht (ADR) ein bestimmter zweiter Zeitabstand verstrichen ist.

4. Verfahren nach einem der Ansprüche 1 bis 3, **dadurch gekennzeichnet,**
**dass** die Signalisierungsnachricht (ADR) über alle netzseitigen Antennen (ANT-A, ANT-B, ANT-C, ANT-D, ANT-E) einer oder mehrerer Funkzellen (FZ1, FZ2) des Funkkommunikationssystems oder über alle netzseitigen Antennen (ANT-A, ANT-B, ANT-C, ANT-D, ANT-E) des Funkkommunikationssystems gesendet wird.

5. Verfahren nach einem der Ansprüche 1 bis 4, **dadurch gekennzeichnet,**
**dass** die Mehrzahl von netzseitigen Antennen (ANT-A, ANT-B, ANT-C, ANT-D, ANT-E) der selben Funkzelle (FZ1, FZ2) des Funkkommunikationssystems angehört, oder
**dass** zumindest manche der netzseitigen Antennen (ANT-A, ANT-B, ANT-C, ANT-D, ANT-E) der Mehrzahl von netzseitigen Antennen (ANT-A, ANT-B, ANT-C, ANT-D, ANT-E) verschiedenen Funkzellen (FZ1, FZ2) des Funkkommunikationssystems angehören.

6. Verfahren nach einem der Ansprüche 1 bis 5, **dadurch gekennzeichnet,**
**dass** die Signalisierungsnachricht (ADR) Identifikationsinformationen der jeweiligen Funkzelle (FZ1, FZ2), über deren netzseitige Antenne (ANT-A, ANT-B, ANT-C, ANT-D, ANT-E) oder Antennen (ANT-A, ANT-B, ANT-C, ANT-D, ANT-E) sie gesendet wird, umfasst, und
**dass** die Antwortnachricht (ADD, ACK) Identifikationsinformationen derjenigen Funkzelle oder Funkzellen (FZ1, FZ2), von deren netzseitigen Antenne oder Antennen (ANT-A, ANT-B, ANT-C, ANT-D, ANT-E) die Funkstation (MS) die Signalisierungsnachricht (ADR) empfangen hat, umfasst.

7. Netzseitige Einrichtung (APS1) in einem Funkkommunikationssystem, welches an einer Mehrzahl von Positionen in etwa regelmäßig über eine Funkzelle verteilte netzseitige Antennen (ANT-A, ANT-B, ANT-C, ANT-D, ANT-E) umfasst, mit Mitteln (RECEIVE) zum Empfangen über zumindest manche der netzseitigen Antennen (ANT-A, ANT-B, ANT-C, ANT-D, ANT-E) einer Nachricht (ADD) einer Funkstation (MS) oder zum Empfangen von Informationen über den Empfang einer über zumindest manche der netzseitigen Antennen (ANT-A, ANT-B, ANT-C, ANT-D, ANT-E) empfangenen Nachricht (ADD) einer Funkstation (MS), wobei es sich bei der netzseitig empfangenen Nachricht (ADD) um eine auf den Empfang einer über mindestens eine netzseitige Antenne (ANT-A, ANT-B, ANT-C, ANT-D, ANT-E) zu der Funkstation (MS) übertragene ausschließlich zu dem Zweck der Anforderung der Antwortnachricht (ADD) versendete Signalisierungsnachricht (ADR), welche die Funkstation (MS) auffordert, eine Antwortnachricht (ADD) zu senden, gesendete Antwortnachricht (ADD) handelt,
mit Mitteln (INSTRUCT) zum Anordnen, dass eine Nutzdatennachricht (DATA) über eine Mehrzahl der netzseitigen Antennen (ANT-A, ANT-B, ANT-C, ANT-D, ANT-E) an die Funkstation (MS) gesendet wird,
mit Mitteln (DECIDE) zum Bestimmen der Zugehörigkeit von netzseitigen Antennen (ANT-A, ANT-B, ANT-C, ANT-D, ANT-E) zu der Mehrzahl von netzseitigen Antennen (ANT-A, ANT-B, ANT-C, ANT-D, ANT-E) in Abhängigkeit davon, welche netzseitigen Antennen (ANT-A, ANT-B, ANT-C, ANT-D, ANT-E) die Nachricht (ADD) der Funkstation (MS) empfangen haben.

8. Computerprogrammprodukt für eine netzseitige Einrichtung (APS1) in einem Funkkommunikationssystem, welches an einer Mehrzahl von Positionen in etwa regelmäßig über eine Funkzelle verteilte netzseitige Antennen (ANT-A, ANT-B, ANT-C, ANT-D, ANT-E) umfasst,
mit Mitteln zum Empfangen von Informationen über den Empfang einer über zumindest manche der netzseitigen Antennen (ANT-A, ANT-B, ANT-C, ANT-D, ANT-E) empfangenen Nachricht (ADD) einer Funkstation (MS), wobei es sich bei der netzseitig empfangenen Nachricht (ADD) um eine auf-den Empfang einer über mindestens eine netzseitige Antenne (ANT-A, ANT-B, ANT-C, ANT-D, ANT-E) zu der Funkstation (MS) übertragene ausschließlich zu dem Zweck der Anforderung der Antwortnachricht (ADD) versendete Signalisierungsnachricht (ADR), welche die Funkstation (MS) auffordert, eine Antwortnachricht (ADD) zu senden, gesendete Antwortnachricht (ADD) handelt,
mit Mitteln zum Festlegen, dass eine Nutzdatennachricht (DATA) über eine Mehrzahl der netzseitigen Antennen (ANT-A, ANT-B, ANT-C, ANT-E, ANT-E) an die Funkstation (MS) gesendet wird,
mit Mitteln zum Bestimmen der Zugehörigkeit von netzseitigen Antennen (ANT-A, ANT-B, ANT-C, ANT-E, ANT-E) zu der Mehrzahl von netzseitigen Antennen (ANT-A, ANT-B, ANT-C, ANT-E, ANT-E) in Abhängigkeit davon, welche netzseitigen Antennen (ANT-A, ANT-B, ANT-C, ANT-E, ANT-E) die Nachricht (MESSAGE; ADD, ACK) der Funkstation (MS) empfangen haben.

## Claims

1. Method for communication in a radio communication system, comprising network-side devices (APS1, APS2, ANT-A, ANT-B, ANT-C, ANT-D, ANT-E), mobile stations (MS), and network-side antennas (ANT-A, ANT-B, ANT-C, ANT-D, ANT-E) distributed over a plurality of roughly regular positions over a radio cell,
in which
a message (ADD) of a mobile station (MS) is received by at least some of the network-side antennas (ANT-A, ANT-B, ANT-C, ANT-D, ANT-E),
subsequently a user data message (DATA) is transmitted via a plurality of the network-side antennas (ANT-A, ANT-B, ANT-C, ANT-D, ANT-E) to the mobile station (MS), with which network-side antennas (ANT-A, ANT-B, ANT-C, ANT-D, ANT-E) belong to the plurality of network-side antennas (ANT-A, ANT-B, ANT-C, ANT-D, ANT-E) depending on which network-side antennas (ANT-A, ANT-B, ANT-C, ANT-D, ANT-E) have received the message (ADD) of the mobile station (MS),
**characterized in that**
a signaling message (ADR) which requests the mobile station (MS) to transmit a response message (ADD) is transmitted via at least one network-side antenna (ANT-A, ANT-B, ANT-C, ANT-D, ANT-E) to the mobile station (MS), with the signaling message being used exclusively for the purposes of requesting the response message (ADD),
and
the message (ADD) received on the network side being a response message (ADD) sent in response to the receipt of a signaling message (ADR).

2. Method according to claim 1, **characterized in that,**
the signaling message (ADR) is sent at regular first intervals.

3. Method according to one of the claims 1 to 2,
**characterized in that**
the signaling message (ADR) is transmitted before the transmission of the user data message (DATA) to the mobile station (MS) under the condition that a specific second period of time has elapsed since the last transmission of a message of the same type as the signaling message (ADR).

4. Method according to one of the claims 1 to 3,
**characterized in that**
the signaling message (ADR) is transmitted via all network-side antennas (ANT-A, ANT-B, ANT-C, ANT-D, ANT-E) of one or more radio cells (FZ1, FZ2) of the radio communications system or via all network-side antennas (ANT-A, ANT-B, ANT-C, ANT-D, ANT-E) of the radio communications system.

5. Method according to one of the claims 1 to 4,
**characterized in that**
the plurality of network-side antennas (ANT-A, ANT-B, ANT-C, ANT-D, ANT-E) belong to same radio cell (FZ1, FZ2) of the radio communications system, or
at least some of the network-side antennas (ANT-A, ANT-B, ANT-C, ANT-D, ANT-E) of the plurality of network-side antennas (ANT-A, ANT-B, ANT-C, ANT-D, ANT-E) belong to different radio cells (FZ1, FZ2) of the radio communications system.

6. Method according to one of the claims 1 to 5,
**characterized in that**
the signaling message (ADR) comprises identification information of the relevant radio cell (FZ1, FZ2), about the network-side antenna (ANT-A, ANT-B, ANT-C, ANT-D, ANT-E) or antennas (ANT-A, ANT-B, ANT-C, ANT-D, ANT-E) via which it is transmitted, and
the response message (ADD, ACK) comprises identification information of that radio cell or radio cells (FZ1, FZ2), from the network-side antenna or antennas (ANT-A, ANT-B, ANT-C, ANT-D, ANT-E) of which the mobile station (MS) has received the signaling message (ADR).

7. Network-side device (APS1) in a radio communications, which comprises network-side antennas (ANT-A, ANT-B, ANT-C, ANT-D, ANT-E) distributed roughly regularly at a plurality of positions over a radio cell,
with means (RECEIVE) for receiving via at least some of the network-side antennas (ANT-A, ANT-B, ANT-C, ANT-D, ANT-E) a message (ADD) of a mobile station (MS) or for receiving information about the receipt of a message (DD) of a mobile station received via at least some of the network-side antennas (ANT-A, ANT-B, ANT-C, ANT-D, ANT-E), with the message (ADD) received on the network side being a response message (ADD) received in response to a signaling message (ADR) received via at least one network-side antenna (ANT-A, ANT-B, ANT-C, ANT-D, ANT-E) to the mobile station (MS) transmitted exclusively for the purposes of requesting the response message (ADD) which requests the mobile station (MS) to send a response message (ADD),
with means (INSTRUCT) for arranging that a user data message (DATA) is transmitted via a plurality of the network-side antennas (ANT-A, ANT-B, ANT-C, ANT-D, ANT-E) to the mobile station (MS),
with means (DECIDE) for deciding whether network-side antennas (ANT-A, ANT-B, ANT-C, ANT-D, ANT-E) belong to the plurality of network-side antennas (ANT-A, ANT-B, ANT-C, ANT-D, ANT-E) depending on which network-side antennas (ANT-A, ANT-B, ANT-C, ANT-D, ANT-E) have received the message (ADD) of the mobile station (MS).

8. Computer program product for a network-side device (APS1) in a radio communications system, which comprises antennas (ANT-A, ANT-B, ANT-C, ANT-D, ANT-E) distributed roughly regularly at a plurality of positions over a radio cell, with means for receiving information about the receipt of a message (ADD) of a mobile station received via at least some of the network-side antennas (ANT-A, ANT-B, ANT-C, ANT-D, ANT-E), with the message (ADD) received on the network side being a response message (ADD) received in response to a signaling message (ADR) received via at least one network-side antenna (ANT-A, ANT-B, ANT-C, ANT-D, ANT-E) to the mobile station (MS) transmitted exclusively for the purposes of requesting the response message (ADD) which requests the mobile station (MS) to send a response message (ADD),
with means for deciding that a user data message (DATA) will be sent over a plurality of network-side antennas (ANT-A, ANT-B, ANT-C, ANT-D, ANT-E) to the mobile station (MS),
with means for deciding whether network-side antennas (ANT-A, ANT-B, ANT-C, ANT-D, ANT-E) belong to the plurality of network-side antennas (ANT-A, ANT-B, ANT-C, ANT-D, ANT-E), depending on which network-side antennas (ANT-A, ANT-B, ANT-C, ANT-D, ANT-E) have received the message (MESSAGE; ADD, ACK) of the mobile station (MS).

## Revendications

1. Procédé pour communiquer dans un système de radiocommunication comprenant des dispositifs côté réseau (APS1, APS2, ANT-A, ANT-B, ANT-C, ANT-D, ANT-E), des stations radio (MS) et, sur une pluralité de positions, des antennes (ANT-A, ANT-B, ANT-C, ANT-D, ANT-E), côté réseau, réparties à peu près régulièrement sur une cellule radio, dans lequel
un message (ADD) d'une station radio (MS) est reçu par au moins certaines des antennes (ANT-A, ANT-B, ANT-C, ANT-D, ANT-E) côté réseau,
suite à cela, un message de données utiles (DATA) est transmis à la station radio (MS) par l'intermédiaire d'une pluralité des antennes côté radio (ANT-A, ANT-B, ANT-C, ANT-D, ANT-E),
l'appartenance d'antennes côté réseau (ANT-A, ANT-B, ANT-C, ANT-D, ANT-E) à la pluralité d'antennes côté radio (ANT-A, ANT-B, ANT-C, ANT-D, ANT-E) dépend du fait de savoir quelles antennes côté réseau (ANT-A, ANT-B, ANT-C, ANT-D, ANT-E) ont reçu le message (ADD) de la station radio (MS),
**caractérisé**
**en ce qu'**un message de signalisation (ADR) demandant à la station radio (MS) d'émettre un message de réponse (ADD) est transmis à la station radio (MS) par l'intermédiaire d'au moins une antenne côté réseau (ANT-A, ANT-B, ANT-C, ANT-D, ANT-E), le message de signalisation (ADR) étant émis uniquement dans le but de demander le message de réponse (ADD),
et
**en ce que** le message (ADD) reçu côté réseau est un message de réponse (ADD) émis suite à la réception du message de signalisation (ADR).

2. Procédé selon la revendication 1, **caractérisé en ce que** le message de signalisation (ADR) est émis à intervalles de temps réguliers.

3. Procédé selon l'une quelconque des revendications 1 à 2,
**caractérisé**
**en ce que** le message de signalisation (ADR) est émis à la station radio (MS) avant l'émission du message de données utiles (DATA), à la condition que depuis la dernière émission d'un message du même type que le message de signalisation (ADR), un deuxième intervalle de temps déterminé se soit écoulé.

4. Procédé selon l'une quelconque des revendications 1 à 3,
**caractérisé**
**en ce que** le message de signalisation (ADR) est émis par l'intermédiaire de toutes les antennes côté réseau (ANT-A, ANT-B, ANT-C, ANT-D, ANT-E) d'une ou de plusieurs cellules radio (FZ1, FZ2) du système de radiocommunication ou par l'intermédiaire de toutes les antennes côté réseau (ANT-A, ANT-B, ANT-C, ANT-D, ANT-E) du système de radiocommunication.

5. Procédé selon l'une quelconque des revendications 1 à 4,
**caractérisé**
**en ce que** la pluralité d'antennes côté réseau (ANT-A, ANT-B, ANT-C, ANT-D, ANT-E) appartiennent à la même cellule radio (FZ1, FZ2) du système de radiocommunication ou
**en ce qu'**au moins certaines des antennes côté réseau (ANT-A, ANT-B, ANT-C, ANT-D, ANT-E) appartiennent à la pluralité d'antennes côté réseau (ANT-A, ANT-B, ANT-C, ANT-D, ANT-E) de différentes cellules radio (FZ1, FZ2) du système de radiocommunication.

6. Procédé selon l'une quelconque des revendications 1 à 5,
**caractérisé**
**en ce que** le message de signalisation (ADR) comprend des informations d'identification de la cellule radio respective (FZ1, FZ2), par l'intermédiaire de l'antenne côté réseau (ANT-A, ANT-B, ANT-C, ANT-D, ANT-E) ou des antennes (ANT-A, ANT-B, ANT-C, ANT-D, ANT-E) de laquelle il est émis, et
**en ce que** le message de réponse (ADR, ACK) comprend des informations d'identification de la cellule radio ou des cellules radio (FZ1, FZ2), par l'antenne ou par les antennes côté réseau (ANT-A, ANT-B, ANT-C, ANT-D, ANT-E) de laquelle la station radio (MS) a reçu le message de signalisation (ADR).

7. Dispositif côté réseau (APS1) dans un système de radiocommunication, lequel comprend, sur une pluralité de positions, des antennes côté réseau (ANT-A, ANT-B, ANT-C, ANT-D, ANT-E) réparties à peu près régulièrement sur une cellule radio,
comprenant des moyens (RECEIVE) pour recevoir, par l'intermédiaire d'au moins certaines des antennes côté réseau (ANT-A, ANT-B, ANT-C, ANT-D, ANT-E), un message (ADD) d'une station radio (MS) ou pour recevoir des informations concernant la réception d'un message (ADD) d'une station radio (MS), reçu par l'intermédiaire d'au moins certaines des antennes côté réseau (ANT-A, ANT-B, ANT-C, ANT-D, ANT-E), le message (ADD) reçu côté réseau étant un message de réponse (ADD) émis suite à la réception d'un message de signalisation (ADR) transmis à la station radio (MS)par l'intermédiaire d'au moins une antenne côté réseau (ANT-A, ANT-B, ANT-C, ANT-D, ANT-E) émis uniquement dans le but de demander le message de réponse (ADD), lequel message de signalisation demande à la station radio (MS) d'émettre un message de réponse (ADD),
comprenant des moyens (INSTRUCT) pour ordonner qu'un message de données utiles (DATA) soit émis à la station radio (MS) par l'intermédiaire d'une pluralité des antennes côté réseau (ANT-A, ANT-B, ANT-C, ANT-D, ANT-E),
comprenant des moyens (DECIDE) pour déterminer l'appartenance d'antennes (ANT-A, ANT-B, ANT-C, ANT-D, ANT-E) à la pluralité d'antennes côté réseau (ANT-A, ANT-B, ANT-C, ANT-D, ANT-E) en fonction du fait de savoir quelles antennes côté réseau (ANT-A, ANT-B, ANT-C, ANT-D, ANT-E) ont reçu le message (ADD) de la station radio (MS).

8. Produit de programme d'ordinateur pour un dispositif (APS1) côté réseau dans un système de radiocommunication, lequel comprend, sur une pluralité de positions, des antennes côté réseau (ANT-A, ANT-B, ANT-C, ANT-D, ANT-E) réparties à peu près régulièrement sur une cellule radio,
comprenant des moyens pour recevoir des informations concernant la réception d'un message (ADD) d'une station radio (MS), reçu par l'intermédiaire d'au moins certaines des antennes côté réseau (ANT-A, ANT-B, ANT-C, ANT-D, ANT-E), le message (ADD) reçu côté réseau étant un message de réponse (ADD) émis suite à la réception d'un message de signalisation (ADR) transmis à la station radio (MS) par l'intermédiaire d'au moins une antenne côté réseau (ANT-A, ANT-B, ANT-C, ANT-D, ANT-E) et émis uniquement dans le but de demander le message de réponse (ADD), lequel message de signalisation demande à la station radio (MS) d'émettre un message de réponse (ADD),
comprenant des moyens pour déterminer qu'un message de données utiles (DATA) soit émis à la station radio (MS) par l'intermédiaire d'une pluralité des antennes côté réseau (ANT-A, ANT-B, ANT-C, ANT-D, ANT-E),
comprenant des moyens pour déterminer l'appartenance d'antennes côté réseau (ANT-A, ANT-B, ANT-C, ANT-D, ANT-E) à la pluralité d'antennes (ANT-A, ANT-B, ANT-C, ANT-D, ANT-E) côté réseau en fonction du fait de savoir quelles antennes côté réseau (ANT-A, ANT-B, ANT-C, ANT-D, ANT-E) ont reçu le message (MESSAGE ; ADD, ACK) de la station radio (MS).
